# EUROPÄISCHE PATENTSCHRIFT

(11) **EP 3 573 475 B1**
(45) Veröffentlichungstag und Bekanntmachung des Hinweises auf die Patenterteilung: **08.06.2022**
(21) Anmeldenummer: 18702962.4
(22) Anmeldetag: 29.01.2018
(51) Int. Cl.: A23L 3/00, A23L 3/18

(54) **VERFAHREN UND VORRICHTUNG ZUR KONTINUIERLICHEN BEHANDLUNG MIT GEPULSTEM ELEKTRISCHEM FELD**
METHOD AND DEVICE FOR CONTINUOUS TREATMENT WITH PULSED ELECTRIC FIELD
PROCÉDÉ ET DISPOSITIF DE TRAITEMENT CONTINU AU MOYEN D'UN CHAMP ÉLECTRIQUE PULSÉ

(30) Priorität: 27.01.2017 DE 202017100453 U
(43) Veröffentlichungstag der Anmeldung: 04.12.2019
(73) Patentinhaber: Deutsches Institut für Lebensmitteltechnik e.V., 49610 Quakenbrück (DE)
(72) Erfinder: TÖPFL, Stefan, 49610 Quakenbrück (DE); HEINZ, Volker, 49610 Quakenbrück (DE); ISAAK, Johann, 49610 Quakenbrück (DE); STUTE, Martin, 49610 Quakenbrück (DE)
(74) Vertreter: Taruttis, Stefan Georg
(86) Internationale Anmeldenummer: PCT/EP2018/052170
(87) Internationale Veröffentlichungsnummer: WO 2018/138361

(56) Entgegenhaltungen:
- EP-A1- 2 941 968
- WO-A1-02/01971
- US-A- 5 326 530
- US-A1- 2004 166 019
- US-A1- 2006 106 210
- US-A1- 2006 188 992
- Berghofer, Emmerich et al: "Lebensmittelverarbeitung, Teil 4, Neue Verfahren und Techniken bei der Lebensmittelherstellung und Lebensmittelversorgung (Auszug)", Bundesministerium für Gesundheit, Sektion II , Mai 2016 (2016-05), Seiten 78-84, XP002778908, ISBN: 978-3-902611-95-6 Gefunden im Internet: URL:https://www.bmgf.gv.at/

## Beschreibung

Die vorliegende Erfindung betrifft eine Vorrichtung mit einem Förderband, das durch ein Gehäuse geführt ist, in dem Elektroden zur Erzeugung gepulster elektrischer Felder angeordnet sind, die in einem Abstand zueinander um das Förderband angeordnet sind. Die Vorrichtung eignet sich insbesondere für ein Verfahren zur Behandlung von Lebensmitteln, insbesondere rohen pflanzlichen Lebensmitteln, mit gepulsten elektrischen Feldern, bei dem die Vorrichtung verwendet wird. Die Elektroden sind mit entgegengesetzten Polen einer Spannungsversorgung verbunden.

Das Gehäuse und das daran geführte Förderband sind bevorzugt in einem wasserdichten Behälter angeordnet, der oberhalb einer Füllhöhe für Wasser offen sein kann und bevorzugt einen schwenkbaren Deckel aufweist. Bevorzugt weist das Förderband an seinen jeweiligen Umlenkstellen Abschnitte auf, die oberhalb der Füllhöhe für Wasser angeordnet sind bzw. auf eine Höhe oberhalb der Füllhöhe für Wasser ansteigen, um Übergabestellen oberhalb der Füllhöhe zu bilden. Alternativ kann das Gehäuse selbst von seinem Gehäuseboden bis zumindest in eine Höhe wasserdicht sein, in der Lebensmittel auf dem Förderband zwischen den Elektroden bewegt werden.

Das Förderband weist Mitnehmer auf, die sich zwischen den Längskanten des Förderbands erstrecken, z.B. etwa senkrecht zu den Längskanten des Förderbands. Die Mitnehmer erstrecken sich oberhalb des Förderbands, bevorzugt etwa senkrecht zu dessen Oberfläche. Das Förderband läuft zwischen zwei Umlenkrollen um. Bevorzugt verläuft das Förderband in einem Abschnitt in einem mit Wasser befüllbaren Behälter unterhalb der Füllhöhe für Wasser, wobei in diesem Abschnitt das Obertrum oberhalb des Gehäusebodens verläuft und das Untertrum unterhalb des Gehäusebodens. Entsprechend ist in diesem Abschnitt die Bodenplatte mit den daran verlaufenden Abschnitten von Obertrum und Untertrum unterhalb der Füllhöhe für Wasser innerhalb des Behälters angeordnet.

Die Vorrichtung zeichnet sich durch einen Aufbau aus, der eine effiziente Erzeugung von gepulsten elektrischen Feldern zwischen den Elektroden und oberhalb des Förderbands ermöglicht und damit ein effizientes Verfahren zur Behandlung von insbesondere stückigen Lebensmitteln mit gepulsten elektrischen Feldern ermöglicht. Ein weiterer Vorteil der Vorrichtung liegt in ihrem einfachen Aufbau.

Es ist bekannt, rohe Pflanzenteile, insbesondere Kartoffeln, mit gepulsten elektrischen Feldern zu behandeln, die zwischen zwei beabstandeten Elektroden erzeugt werden, zwischen denen die Pflanzenteile angeordnet sind, z.B. in Wasser.

Die WO 02/01971 A1 zeigt einen Fallschacht mit seitlich angeordneten nadelförmigen Elektroden in einer Elektrodenanordnung und in weiterer Ausführungsform eine Elektrode, die oberhalb und parallel zu einem horizontalen Förderband angeordnet ist.

Die EP 2941968 A1 beschreibt ein Wasserbad, bei dem Obertrum und Untertrum eines Förderbands zwischen Elektroden laufen, die oberhalb und unterhalb der beiden angeordnet sind.

Die US 2006/0188992 A1 beschreibt Verfahren und Vorrichtung zur Elektroporation für den DNA-Transfer bei Unterdruck oder Überdruck der PEF-Zelle. Es wird eine Vorrichtung gezeigt, bei der Behälter durch einen Eingang in einen hermetisch geschlossenen Container gefördert werden, beispielsweise durch ein Förderband. In dem hermetisch geschlossenen Container kann ein Überdruck oder Unterdruck erzeugt werden. Der Behälter kann Elektroden enthalten. Die Elektroden werden daher mit dem Behälter entlang des Förderbands bewegt. Dabei stehen sie senkrecht zur Förderrichtung und werden mit dem Förderband bewegt. Eine Relativbewegung zwischen Förderband und Elektroden findet nicht statt.

Die US 2004/0166019 A1 beschreibt ein Wasserbad mit Anordnung von Elektroden oberhalb und unterhalb eines Förderbands.

Die US 5,326,530 beschreibt eine vertikal von Wasser durchströmte Behandlungskammer mit einer konzentrisch angeordneten Elektrode.

Die Aufgabe der Erfindung liegt in der Bereitstellung einer alternativen Vorrichtung zur kontinuierlichen Behandlung von Lebensmitteln mit gepulsten elektrischen Feldern. Bevorzugt soll die Vorrichtung eine energieeffiziente Erzeugung von gepulsten elektrischen Feldern erlauben und, besonders bevorzugt, einen einfachen Aufbau haben.

Die Erfindung löst die Aufgabe mit den Merkmalen der Ansprüche und stellt insbesondere eine Vorrichtung zur kontinuierlichen Behandlung von Lebensmitteln mit gepulsten elektrischen Feldern bereit, die ein Förderband aufweist, das in einem Gehäuse geführt ist. Die Führung des Förderbands umfasst die Längskanten des Förderbands in jeweils einer Ausnehmung, die z.B. innerhalb der Seitenwände des Gehäuses angeordnet ist und bevorzugt durch den Gehäuseboden und davon beabstandet innen an den Seitenwänden angebrachte seitliche Isolatorplatten gebildet werden oder als Nut innerhalb der seitlichen Isolatorplatten gebildet werden. Das Obertrum des Förderbands wird durch die Führungen oberhalb des Gehäusebodens innerhalb des Gehäuses geführt. Die seitlichen Isolatorplatten haben eine konstante Dicke und sind innen auf den Seitenwänden angebracht, die z.B. aus Edelstahl oder Isolatormaterial bestehen können. Weiter wird ein Verfahren zur Behandlung von Lebensmitteln, insbesondere rohen pflanzlichen Lebensmitteln, beschrieben, bei dem die Lebensmittel durch das Förderband zwischen den Elektroden hindurch befördert werden und die Elektroden mit Spannungsimpulsen beaufschlagt werden. Der Behälter, in dem die Elektroden angeordnet sind, ist dabei bis zur Füllhöhe mit Wasser gefüllt.

Das Förderband weist über seine Oberfläche ragende Mitnehmer auf, die sich bis in einen geringen Abstand angrenzend an die seitlichen Isolatorplatten erstrecken, so dass die Lebensmittel einerseits von den Mitnehmern gefördert werden, auch wenn das Gehäuse oberhalb des Förderbands bis zu einer Füllhöhe mit Wasser gefüllt ist, andererseits nicht zwischen den seitlichen Isolatorplatten und den Mitnehmern durchrutschen oder sich dazwischen verklemmen können. Der geringe Abstand, bis in den sich die Mitnehmer an die Isolatorplatten erstrecken, kann z.B. 1 bis 30 mm, bevorzugt 2 oder 5 mm bis 20 mm betragen. Optional können die Seitenwände und seitlichen Isolatorplatten einstückig aus Isolatormaterial ausgebildet sein, z.B. jeweils in zumindest zwei Abschnitte längs des Förderbands unterteilt sein oder sich vollständig entlang jeweils einer Seite erstrecken.

Für das Untertrum des Förderbands ist bevorzugt eine Führung unterhalb des Gehäusebodens vorgesehen, die in Form von z.B. Nuten die Längskanten des Förderbands zumindest abschnittsweise umfasst. Die Nuten können durch Führungsleisten gebildet werden, die in einem Abstand vom Gehäuseboden angeordnet sind, z.B. an den Seitenwänden angebracht sind. Alternativ können die Führungsleisten selbst Nuten aufweisen, die die Längskanten des Förderbands umfassen. Die Führungsleisten können z.B. an dem Gehäuseboden selbst festgelegt sein oder an den Seitenwänden unterhalb des Gehäusebodens, bzw. gegenüber den seitlichen Isolatorplatten und gegenüber dem Obertrum.

Bevorzugt ist das Förderband in seinen endständigen Abschnitten auf eine Höhe, gleich oder verschieden, geführt, die oberhalb der Füllhöhe liegt. Oberhalb der Füllhöhe des Gehäuses liegende endständige Abschnitte des Förderbands bilden Übergabestellen für die zu behandelnden Lebensmittel, insbesondere eine Aufnahmestelle und in Bewegungsrichtung des Förderbands eine Abgabestelle für die Lebensmittel.

Die seitlichen Isolatorplatten weisen gegenüberliegende Ausnehmungen auf, in die passend Elektroden eingesetzt sind, die mit entgegengesetzten Polen einer Spannungsversorgung verbunden sind. Durch die Anordnung der Elektroden auf beiden Seiten des Förderbands kann sich das elektrische Feld oberhalb des Förderbands ausbilden, so dass das Förderband selbst keinen elektrischen Widerstand bildet.

Die Ausnehmungen der seitlichen Isolatorplatten erstrecken sich bevorzugt über die gesamte Höhe der seitlichen Isolatorplatten, so dass die Ausnehmungen eine vertikale Führung für die Elektroden bilden, in die die Elektroden eingeschoben werden können. Die Ausnehmungen der seitlichen Isolatorplatten weisen bevorzugt eine Hinterschneidung, bevorzugter zwei Hinterschneidungen auf, mit denen eine Elektrode längsverschieblich in Eingriff steht und die Elektrode in der Ausnehmung hält. Die Elektroden können über die seitlichen Isolatorplatten und über optionale Deckelplatten hinausragen, so dass sie auf einfache Weise mit Kabeln mit der Spannungsversorgung verbunden werden können.

Die Elektroden haben bevorzugt einen über ihre Länge konstanten Querschnitt, insbesondere in dem Abschnitt, mit dem sie in den Ausnehmungen der seitlichen Isolatorplatten angeordnet sind. Die Elektroden können z.B. um maximal 20 mm, bevorzugt maximal 10 mm, bevorzugter maximal 5 mm über die Oberfläche der seitlichen Isolatorplatten vorstehen oder hinter dieser zurückliegen. Optional ist jede Elektrode mit einer Oberfläche bündig mit der Oberfläche der seitlichen Isolatorplatte angeordnet, so dass die Elektrode und die seitliche Isolatorplatte, in der sie in der Ausnehmung geführt ist, eine gemeinsame Ebene bilden, die der gegenüberliegenden Elektrode bzw. der gegenüberliegenden seitlichen Isolatorplatte zugewandt ist. Die gegenüberliegenden seitlichen Isolatorplatten und die in deren Ausnehmungen angeordneten Elektroden sind in parallelen Ebenen angeordnet, zwischen denen das Förderband mit der Breite entsprechend der Mitnehmer geführt ist.

Bevorzugt sind die Elektroden plattenförmig eben, massiv oder hohl, oder Hohlzylinder aus Metall und weiter bevorzugt sind die Ausnehmungen der seitlichen Isolatorplatte passend anteilig zylindrisch und zur gegenüberliegenden Elektrode hin offen. Die Elektroden können über die seitlichen Isolatorplatten vorstehen, z.B. in Richtung auf die gegenüberliegende Elektrode. Optional können die Elektroden mit ihrer Oberfläche bündig zur Oberfläche der seitlichen Isolatorplatten angeordnet sein oder hinter der Oberfläche der seitlichen Isolatorplatten liegen. Die Ausnehmungen in den seitlichen Isolatorplatten, die eine Öffnung für die Elektroden bilden, können sich zur Oberfläche der seitlichen Isolatorplatten verbreitern, z.B. mit trichterförmigem Querschnitt. Die Elektroden können z.B. eine der gegenüberliegenden Elektrode zugewandte Breite, die nicht von Isolatorplatten überdeckt ist, zwischen den seitlich angrenzenden seitlichen Isolatorplatten aufweisen, die 10 bis 300 mm beträgt, z.B. bis 250 mm, bis 200 mm, bis 150 mm oder bis 100 mm, bis 50 mm oder bis 30 mm. Die freie Höhe der Elektroden, die nicht von Isolatorplatten oder einer Einhausung überdeckt ist und bevorzugt an der oder mit geringem Abstand oberhalb der Ebene des Untertrums beginnt, beträgt zumindest die Füllhöhe für Wasser oder die Höhe, bis in die eine Deckelplatte im Bereich der Elektroden vom Untertrum beabstandet werden kann.

Die Elektroden sind bevorzugt in ihren Abschnitten, die außerhalb bzw. oberhalb der seitlichen Isolatorplatten liegen, wobei die Abschnitte insbesondere die seitlichen Isolatorplatten und/oder die Seitenwände und/oder die Füllhöhe für Wasser überragen, von einer Einhausung aus Isolator, z.B. nichtleitendem Kunststoff, eingefasst, wobei die Einhausung eine Durchführung, bevorzugt genau eine Durchführung, für eine elektrische Leitung aufweist, wobei bevorzugt die Durchführung die hindurchgeführte Leitung wasserdicht umfasst. Eine Einhausung kann z.B. aus wasserdicht aneinander angebrachten Platten aus Isolator aufgebaut sein, wobei eine der Platten der Einhausung zumindest abschnittsweise mit einer seitlichen Isolatorplatte verbunden sein kann oder als ein vorstehender Abschnitt an einer seitlichen Isolatorplatte ausgebildet sein kann. Bevorzugt umfasst zumindest eine Einhausung, bevorzugt beide Einhausungen, den außerhalb der seitlichen Isolatorplatten liegenden Abschnitt einer Elektrode wasserdicht, z.B. indem die Einhausung wasserdicht an der Elektrode anliegt. Dabei kann die Einhausung im Übrigen den Abschnitt einer Elektrode mit Abstand umfassen. Die Füllhöhe für Wasser kann der Abstand der Deckelplatte vom Förderband sein.

Die Leitungen zwischen der Spannungsversorgung und den Elektroden können aus einer Vielzahl paralleler Litzen oder Bleche bestehen oder massiv und einstückig sein, z.B. als Schiene ausgebildet sein. Optional weisen die Leitungen einen gestreckten Querschnitt auf, der z.B. rechteckig ist, und besonders bevorzugt mit der Breitseite auf der Querschnittsfläche einer Elektrode aufliegt. Ein massiver Leiter mit gestrecktem Querschnitt, z.B. eine Stromschiene, kann gegen die endständige Querschnittsfläche der Elektrode durch eine Klemme angepresst werden, die an der seitlichen Isolatorplatte festgelegt ist, in deren Ausnehmung die Elektrode angeordnet ist.

Bevorzugt ist jede Elektrode mittels einer separaten elektrischen Leitung, die ein Koaxialkabel ist, mit der Spannungsversorgung verbunden, wobei weiter bevorzugt die Schirmung des Koaxialkabels an dem Elektrogehäuse der Spannungsversorgung geerdet ist und der Zentralleiter den spannungsführenden Leiter für die eine Elektrode bzw. den Nullleiter für die andere Elektrode bildet. Dabei kann die Schirmung jedes Koaxialkabels innerhalb der Einhausung enden, die jeweils den außerhalb der seitlichen Isolatorplatten liegenden Abschnitt einer Elektrode einfasst. Es hat sich gezeigt, dass Koaxialkabel als Leitungen, insbesondere wenn deren Schirmung an dem Elektrogehäuse geerdet ist, in dem die Spannungsversorgung angeordnet ist, zu einer deutlich geringeren Induktivität als herkömmliche, ungeschirmte Leitungen oder als massive Leiter führen.

Die Spannungsversorgung ist generell ein Impulsgenerator, der z.B. Impulse einer Dauer von 1 bis 25 µs bei einer Spannung von 5 bis 40 kV und einer Impulsleistung von 10 bis 500 J erzeugt. Bevorzugt ist die Spannungsversorgung in einem Elektrogehäuse angeordnet, das direkt an einem mit Wasser befüllbaren Behälter montiert ist, in dem das Förderband angeordnet ist. Auf diese Weise können die Leitungen, die bevorzugt jeweils ein separates Koaxialkabel für jede Elektrode sind, eine geringe Länge aufweisen und entsprechend geringe Verluste erzeugen. Bevorzugt beträgt die Länge jeder Leitung maximal 200 oder maximal 150 cm, bevorzugter maximal 100 cm, nach bevorzugter maximal 40 bis 80 cm.

Durch die Führung des Förderbands entlang seiner Längskanten und die Anordnung der Elektroden in seitlichen Isolatorplatten sind die Elektroden in einem für die Breite des Förderbands und dessen Mitnehmer minimalen Abstand zueinander angeordnet. Auf diese Weise können die gepulsten elektrischen Felder mit geringem elektrischem Energieaufwand erzeugt werden, bzw. die eingesetzte elektrische Energie erzeugt über die Breite des Förderbands effektiv gepulste elektrische Felder.

Bevorzugt weist die Vorrichtung zumindest eine Deckelplatte, optional zwei oder mehr Deckelplatten aus Isolatormaterial auf, die zwischen den Seitenwänden angeordnet sind und/oder auf den oberen Kanten der seitlichen Isolatorplatten aufliegen können. Solche Deckelplatten weisen optional Ausnehmungen auf, die zumindest den Querschnitt der Elektroden haben und durch die die Elektroden angeordnet sind. Die zumindest eine Deckelplatte ist bevorzugt in einem Abstand zum Förderband reversibel einstellbar oder festlegbar, um einen Durchtrittsquerschnitt, der zwischen Förderband und der Deckelplatte und den seitlichen Isolatorplatten und/oder den Elektroden gebildet wird, zu begrenzen. Bevorzugt ist die Deckelplatte zumindest im Bereich der Elektroden in etwa dem Abstand vom Förderband angeordnet, in dem die Mitnehmer über das Förderband ragen. Die reversible Festlegung und/oder Einstellung der mindestens einen Deckelplatte in ihrem Abstand zum Förderband erfolgt bevorzugt in einer Stellung, in der die Deckelplatte mit ihrer dem Förderband zugewandten Oberfläche unterhalb der Füllhöhe von Wasser in dem Bereich der Elektroden liegt, um zu behandelnde Lebensmittel unterhalb der Füllhöhe, bzw. vollständig von Wasser umgeben, in einem festgelegten Durchtrittsquerschnitt zwischen den Elektroden hindurch zu fördern. Die Deckelplatten können z.B. an Trägern festlegbar sein, die sich an oder oberhalb der seitlichen Isolatorplatten zwischen den Seitenwänden erstrecken.

Bevorzugt sind die Seitenwände vertikal angeordnet und die Führung für das Förderband und/oder der Gehäuseboden ist in dem Abschnitt, in dem die Elektroden angeordnet sind, horizontal.

Der Gehäuseboden ist optional durch eine Nut- und Federverbindung mit den Seitenwänden verbunden, die z.B. gegeneinander belastet sind. Auf diese Weise kann die Vorrichtung durch Austausch des Gehäusebodens und des Förderbands sowie dessen Mitnehmer durch jeweils eine schmalere oder breitere Bauform angepasst werden, z.B. an eine andere Feldstärke bei gleicher elektrischer Energie bzw. an einen anderen Querschnitt, ggf. mit entsprechender Erhöhung oder Erniedrigung der eingetragenen elektrischen Energie.

Der Gehäuseboden kann aus Isolatormaterial gebildet sein, die Seitenwände sind aus Edelstahl, bevorzugt aus Isolatormaterial, z.B. Kunststoff.

Bevorzugt ist die Spannungsversorgung eingerichtet, die Elektroden jeweils mit elektrischen Impulsen entgegengesetzter Polarität bei gleichem Betrag der Spannung zu beaufschlagen, z.B. die eine Elektrode mit Spannungsimpulsen von +15 kV, die andere Elektrode mit -15 kV. In dieser Ausführungsform ist keine der Elektroden an Erde gebunden, sondern die Elektroden sind bipolar gegen den elektrischen Nullpunkt geschaltet, beispielsweise symmetrisch eine der Elektroden auf +15 kV und die andere der Elektroden auf - 15 kV. Auf diese Weise sind die Spannungsimpulse an den Elektroden symmetrisch gegen Erde gepolt, z.B. + 15kV / - 15kV. Dies hat den Vorteil, dass der Behälter und das beim Verfahren im Behälter enthaltene Wasser, das in elektrischem Kontakt mit den Elektroden steht, geerdet sein können und selbst keine Spannungsimpulse leiten.

Die Erfindung wird nun anhand schematischer Figuren genauer erläutert, die einen zentralen Abschnitt einer Ausführungsform der Vorrichtung zeigen, an den sich jeweils endständig Abschnitte anschließen, in denen der Gehäuseboden mit den Führungen für das Förderband ansteigt und in denen das Förderband umgelenkt wird. In den Figuren bezeichnen gleiche Bezugsziffern funktionsgleiche Teile.
- Figur 1 zeigt einen Querschnitt durch das Gehäuse senkrecht zur Laufrichtung des Förderbands,
- Figur 2 zeigt ausschnittsweise einen Querschnitt parallel zur Oberfläche des Obertrums des Förderbands,
- Figur 3 zeigt ausschnittsweise einen Querschnitt senkrecht zur Laufrichtung des Förderbands,
- Figur 4 zeigt einen senkrechten Querschnitt durch das Gehäuse parallel zur Laufrichtung des Förderbands,
- Figur 5 zeigt ausschnittsweise einen Querschnitt durch eine Isolatorplatte mit darin angeordneter Elektrode, parallel zur Oberfläche der Isolatorplatte, und
- Figur 6 zeigt einen Querschnitt durch eine Vorrichtung senkrecht zur Laufrichtung des Förderbands.

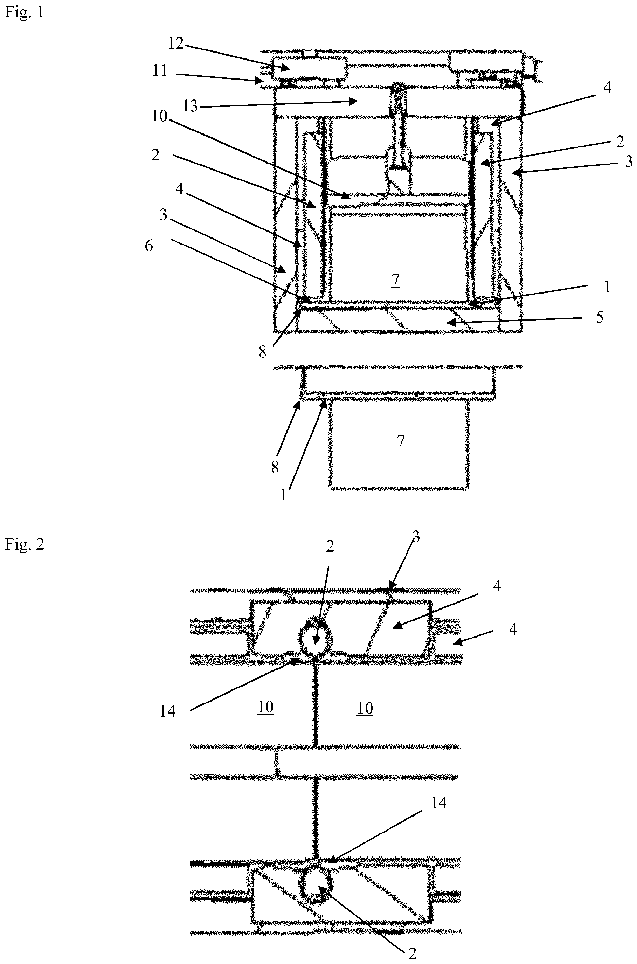

Die Figur 1 zeigt einen Schnitt quer zur Laufrichtung des Förderbands 1 durch eine erfindungsgemäße Vorrichtung in einer Ebene, in der die Elektroden 2 geschnitten werden. Das Gehäuse weist Seitenwände 3 auf, auf deren Innenseite jeweils seitliche Isolatorplatten 4 angebracht sind. Die seitlichen Isolatorplatten 4 sind zueinander parallel und begrenzen den Durchtrittskanal des Gehäuses seitlich, den der Gehäuseboden 5 nach unten begrenzt. Der Durchtrittskanal ist zumindest im Bereich der Elektroden 8 gegenüber dem Förderband 1 durch eine Deckelplatte 10 begrenzt, die sich zwischen den seitlichen Isolatorplatten 4 bzw. zwischen den Elektroden 2 erstreckt. Die Deckelplatte 10 ist generell bevorzugt in einem Abstand vom Förderband 1 angeordnet, der die Höhe der Mitnehmer 7 geringfügig übersteigt, z.B. um maximal 2 cm, bevorzugt maximal 1 cm größer ist als die Höhe der Mitnehmer 7. Generell bevorzugt ist die Deckelplatte 10 zumindest in einem Abschnitt des Förderbands 1, der horizontal angeordnet ist, parallel zu dem Förderband 1. Die Deckelplatte 10 ist in der Höhe einstellbar an Trägern 13 lösbar festgelegt, die sich zwischen den Seitenwänden 3 erstrecken. Die Deckelplatte 10 kann Handgriffe aufweisen, mittels derer die Deckelplatte 10 nach Lösen von den Trägern 13 entfernt werden kann.

Der Gehäuseboden 5 ist optional wasserdicht mit den Seitenwänden 3 verbunden, die seitlichen Isolatorplatten 4 können auch nicht wasserdicht an den Seitenwänden 3 angebracht sein. Bevorzugt sind die seitlichen Isolatorplatten 4 wasserdicht an den Seitenwänden 3 angebracht, optional einstückig mit den Seitenwänden 3 ausgebildet. Das Gehäuse mit Seitenwänden und Gehäuseboden 3 kann generell in einem wasserdichten Behälter angeordnet sein, und dabei kann der Gehäuseboden 3 Durchbrechungen aufweisen.

Das Förderband 1 läuft parallel zum Gehäuseboden 5, der generell bevorzugt zumindest in dem Abschnitt, in dem die Elektroden 2 angeordnet sind, eben ist. Das Förderband 1 weist senkrecht abstehende Mitnehmer 7 auf, die sich z.B. senkrecht zu den Längskanten 8 des Förderbands 1 erstrecken, bevorzugt auch senkrecht zur Oberfläche des Förderbands 1. Die Mitnehmer 7 sind in geringem Abstand von den seitlichen Isolatorplatten 4 angeordnet, so dass sie an diesen vorbei bewegt werden können. Die Längskanten 8 des Obertrums des Förderbands 1 sind in Nuten als Führungen 6 geführt, die durch den Abstand des Gehäusebodens 5 von den seitlichen Isolatorplatten 4 gebildet werden. Das Untertrum des Förderbands 1 wird auf der Unterseite des Gehäusebodens 5 in Führungen geführt.

Die Elektroden 2 überragen die Deckelplatte 10, so dass ein elektrischer Anschluß durch eine Stromschiene 11 oberhalb der Deckelplatte 10 an den Elektroden 2 angebracht sein kann. Eine Stromschiene 11 liegt jeweils an der endständigen Querschnittsfläche einer Elektrode 2 auf und ist mittels einer Klemme 12 gegen diese Querschnittsfläche belastet.

Die Figur 2 zeigt im Schnitt die seitlichen Isolatorplatten 4, in denen die Elektroden 2 in Ausnehmungen angeordnet sind. Die Elektroden 2 sind zylindrisch und liegen mit ihrem Querschnitt abschnittsweise in Hinterschneidungen der Ausnehmungen in den seitlichen Isolatorplatten 4, wobei die Ausnehmungen Öffnungen 14 zur Oberfläche der seitlichen Isolatorplatte 4 aufweisen, die die Oberfläche der Elektrode 2 freigeben bzw. die Elektrode 2 unmittelbar an den Durchtrittsquerschnitt oberhalb des Förderbands 1 angrenzen lassen. Die Elektroden sind mit ihrer Oberfläche bündig zur Ebene der seitlichen Isolatorplatten angeordnet, wobei die Ausnehmungen in den seitlichen Isolatorplatten, die eine Öffnung 14 für die Elektroden bilden, sich mit trichterförmigem Querschnitt zur Oberfläche der seitlichen Isolatorplatten verbreitern. Die hier gezeigten Elektroden 2 haben einen hohlzylindrischen Querschnitt. Die Deckelplatte 10 ist hier geteilt

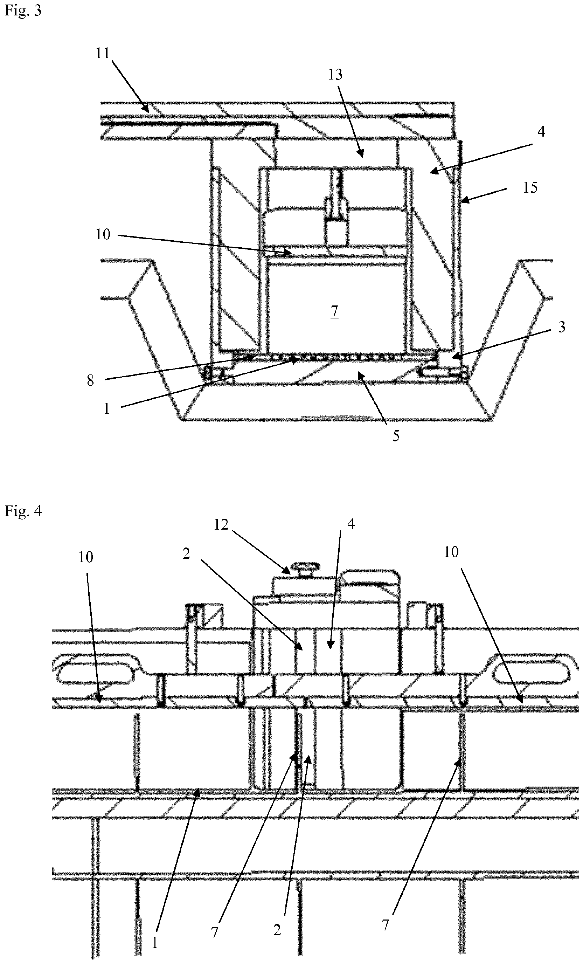

Die Figur 3 stellt abschnittsweise eine Schnittansicht dar, die in einem Abschnitt des Förderbands 1 neben den Elektroden 2 liegt und zeigt, dass der Durchtrittsquerschnitt von dem Förderband 1, das auf dem Gehäuseboden 5 läuft, den seitlichen Isolatorplatten 4 und der Deckelplatte 10 begrenzt wird. Die Mitnehmer 7 weisen bevorzugt eine Größe auf, die mit geringem Abstand, z.B. von 0,5 bis 2 cm, diesen Durchtrittsquerschnitt überdeckt. Die Führung 6 für die Längskanten 8 des Förderbands 1 ist eine Nut, die durch den Abstand zwischen einer seitlichen Isolatorplatte 4 und dem Gehäuseboden 5 gebildet wird.

In der hier gezeigten Ausführungsform sind die Seitenwände 3 wasserdicht mit dem Gehäuseboden 5 verbunden.

Die Figur 4 zeigt das Gehäuse im Schnitt entlang der Förderrichtung des Förderbands 1 senkrecht zu dessen Oberfläche. Wie generell bevorzugt ist in den Figuren gezeigt, dass das Förderband 1 zumindest in einem Abschnitt entlang der Elektroden 2 in einer Ebene angeordnet ist und die Deckelplatte 10 in einem Abstand in einer Ebene parallel dazu angeordnet ist und die seitlichen Isolatorplatten 4 parallel zueinander und senkrecht zur Ebene des Förderbands 1 und der Deckelplatte 10 angeordnet sind, um einen rechteckigen Durchtrittsquerschnitt zwischen sich zu begrenzen. Die seitlichen Isolatorplatten 4 und die Elektroden 2 in deren Ausnehmungen können den Durchtrittsquerschnitt bzw. die Deckelplatte 10 überragen.

Die Führung für das Untertrum des Förderbands 1 ist unterhalb des Gehäusebodens 5 angeordnet.

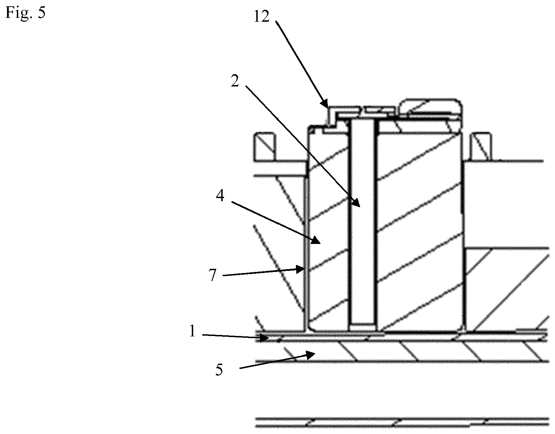

Figur 5 zeigt im Schnitt parallel zur Oberfläche einer seitlichen Isolatorplatte 4 eine Klemme 12, die an der Isolatorplatte festgeschraubt ist und die Stromschiene 11 gegen die Querschnittsfläche der Elektrode 2 belastet, um eine elektrischen Kontakt herzustellen.

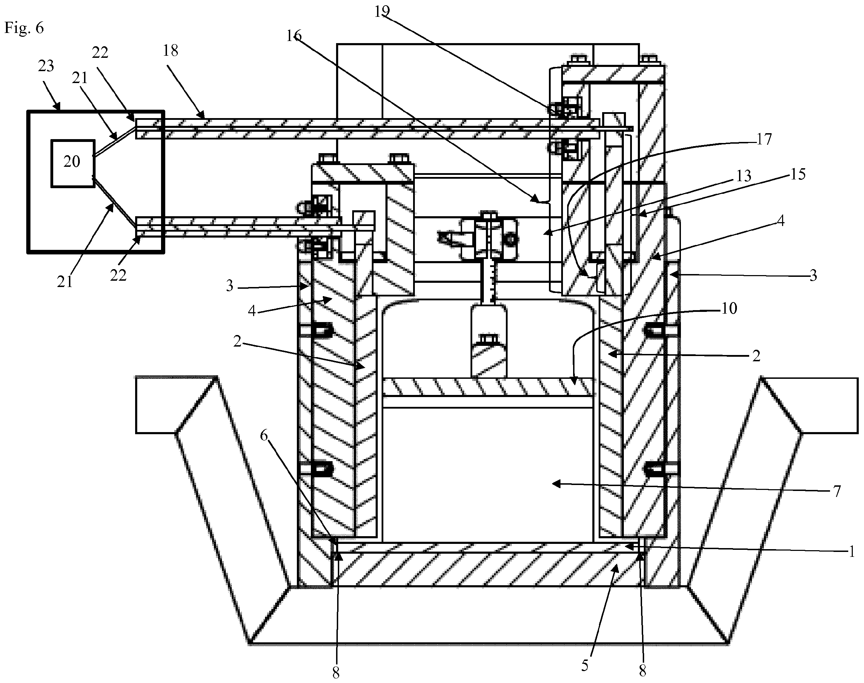

Die Figur 6 zeigt einen Querschnitt durch eine erfindungsgemäße Vorrichtung durch die Elektroden 2 senkrecht zur Laufrichtung des Förderbands 1. Die Elektroden 2 sind in Ausnehmungen der seitlichen Isolatorplatten 4 angeordnet. Gegenüber den Elektroden 2 liegt an den seitlichen Isolatorplatten 4 die Seitenwand 3 an, die z.B. wie gezeigt mit Schrauben miteinander befestigt sein können.

Die Elektroden 2 können in einem Abschnitt 15, der über die Füllhöhe ragt, einstückig sein oder aus mehreren Abschnitten zusammengesetzt sein. Der Abschnitt 15 der Elektroden 2, der über die Füllhöhe ragt, ist entsprechend der bevorzugten Ausführungsform dicht von einer Einhausung 16 umfasst. Dabei bildet die Einhausung 16 einen Dichtungsbereich 17 an dem Bereich der Elektrode 2, an dem der Abschnitt 15 der Elektrode 2 beginnt, der über die Füllhöhe ragt. Im übrigen Bereich kann die Einhausung 16 mit Abstand vom Abschnitt 15 der Elektrode 2 angeordnet sein, wie dies dargestellt ist.

Jede Elektrode 2 ist durch ein separates Koaxialkabel 18 elektrisch mit der Spannungsversorgung verbunden, wobei die Schirmung 22 des Koaxialkabels 18 in der Spannungsversorgung 20 bzw. an dem Elektrogehäuse geerdet ist, das die Spannungsversorgung umgibt, während der Zentralleiter 21 des Koaxialkabels 18 mit der Elektrode 2 verbunden ist. Die Einhausung 16 weist eine wasserdichte Durchführung 19 auf, z.B. in Form einer klemmenden Dichtung, sodass die Einhausung 16 den Abschnitt 15 der Elektrode 2, der über die Füllhöhe ragt, wasserdicht umschließt. Die Spannungsversorgung 20 ist in einem Elektrogehäuse 23 angeordnet, an dem die Schirmung 22 von jedem der separaten Koaxialkabel 18 geerdet ist, während die Zentralleiter 21 der Koaxialkabel 18 jeweils mit der Spannungsversorgung 20 elektrisch verbunden sind.

**Bezugszeichenliste:**

| | | | |
|---|---|---|---|
| 1 | Förderband | 14 | Öffnung der Ausnehmung |
| 2 | Elektrode | 15 | Abschnitt der Elektrode, der über die Füllhöhe ragt |
| 3 | Seitenwand | | |
| 4 | seitliche Isolatorplatte | 16 | Einhausung |
| 5 | Gehäuseboden | 17 | Dichtungsbereich |
| 6 | Führung | 18 | Koaxialkabel |
| 7 | Mitnehmer | 19 | Durchführung |
| 8 | Längskante des Förderbands | 20 | Spannungsversorgung |
| 10 | Deckelplatte | 21 | Zentralleiter |
| 11 | Stromschiene | 22 | Schirmung |
| 12 | Klemme | 23 | Elektrogehäuse |
| 13 | Träger | | |

## Patentansprüche

1. Vorrichtung zur kontinuierlichen Behandlung von Lebensmitteln mit gepulsten elektrischen Feldern, die ein Gehäuse mit einem Gehäuseboden (5) aufweist, der sich zwischen den Seitenwänden (3) des Gehäuses erstreckt, ein durch das Gehäuse geführtes umlaufendes Förderband (1) mit quer zur Förderrichtung angeordneten Mitnehmern (7), und zwei in dem Gehäuse angeordnete und voneinander beabstandete Elektroden (2), die mit den Anschlüssen entgegengesetzter Polarität einer Spannungsversorgung verbunden sind, wobei seitliche Isolatorplatten (4) beiderseits des Förderbands (1) innen an den Seitenwänden (3) angeordnet sind, wobei sich die Mitnehmer (7) bis in einen geringen Abstand, der 1 bis 30 mm beträgt, an die seitlichen Isolatorplatten (4) erstrecken und die Elektroden (2) in passenden Ausnehmungen der seitlichen Isolatorplatten (4) angeordnet sind, die zur gegenüberliegenden Elektrode hin offen sind, wobei die Elektroden (2) um maximal 20 mm über die Oberflächen der seitlichen Isolatorplatten (4) ragen oder hinter diesen liegen.

2. Vorrichtung nach Anspruch 1, **dadurch gekennzeichnet, dass** die Elektroden (2) hohlzylindrisch sind und sich senkrecht zur Ebene des Förderbands (1) erstrecken.

3. Vorrichtung nach einem der voranstehenden Ansprüche, **dadurch gekennzeichnet, dass** sich die Elektroden (2) vertikal erstrecken.

4. Vorrichtung nach einem der voranstehenden Ansprüche, **dadurch gekennzeichnet, dass** die Elektroden (2) mit einer Oberfläche bündig mit den seitlichen Isolatorplatten (4) angeordnet sind.

5. Vorrichtung nach einem der voranstehenden Ansprüche, **dadurch gekennzeichnet, dass** die Führungen für die Längskanten (8) des Förderbands (1) in dem Abschnitt, in dem die Elektroden (2) in Ausnehmungen der seitlichen Isolatorplatten (4) angeordnet sind, horizontal verlaufen.

6. Vorrichtung nach einem der voranstehenden Ansprüche, **dadurch gekennzeichnet, dass** die Führungen für die Längskanten (8) des Förderbands (1) parallel zum Gehäuseboden (5) verlaufen.

7. Vorrichtung nach einem der voranstehenden Ansprüche, **dadurch gekennzeichnet, dass** der Gehäuseboden (5) aus Isolatormaterial gebildet ist.

8. Vorrichtung nach einem der voranstehenden Ansprüche, **dadurch gekennzeichnet, dass** die Seitenwände (3) aus Isolatormaterial gebildet sind.

9. Vorrichtung nach einem der voranstehenden Ansprüche, **dadurch gekennzeichnet, dass** die Seitenwände (3) und die seitlichen Isolatorplatten wasserdicht miteinander verbunden sind oder einstückig ausgebildet sind.

10. Vorrichtung nach einem der voranstehenden Ansprüche, **dadurch gekennzeichnet, dass** der geringe Abstand zwischen den Mitnehmern (7) und den seitlichen Isolatorplatten (4) 1 bis 10 mm beträgt.

11. Vorrichtung nach einem der voranstehenden Ansprüche, **dadurch gekennzeichnet, dass** sich die Elektroden (2) senkrecht zu den Führungen für die Längskanten des Förderbands (1) zumindest von der Ebene des Förderbands (1) entlang der vollständigen Höhe der jeweiligen seitlichen Isolatorplatte (4) erstrecken.

12. Vorrichtung nach einem der voranstehenden Ansprüche, **dadurch gekennzeichnet, dass** die Ausnehmungen der seitlichen Isolatorplatten (4) zum Querschnitt der Elektroden (2) passen und zumindest eine Hinterschneidung aufweisen und die Elektroden (2) längsverschieblich in der Ausnehmung gehalten sind.

13. Vorrichtung nach einem der voranstehenden Ansprüche, **dadurch gekennzeichnet, dass** zumindest eine Deckelplatte (10), die parallel zum Förderband (1) angeordnet ist, den Durchtrittsquerschnitt zwischen den seitlichen Isolatorplatten überdeckt.

14. Vorrichtung nach einem der voranstehenden Ansprüche, **dadurch gekennzeichnet, dass** die Elektroden (2) Abschnitte (15) aufweisen, die über die Füllhöhe für Wasser ragen, und diese Abschnitte (15) jeweils von einer Einhausung (16) wasserdicht umfasst sind.

15. Vorrichtung nach einem der voranstehenden Ansprüche, **dadurch gekennzeichnet, dass** die Elektroden (2) jeweils mittels einer separaten Leitung, die ein Koaxialkabel (18) ist, mit einer Spannungsversorgung (20) verbunden sind, wobei die Schirmung (22) jedes Koaxialkabels (18) an einem Elektrogehäuse (23) geerdet ist, in dem die Spannungsversorgung (20) angeordnet ist und jede Elektrode (2) nur jeweils mit dem Zentralleiter (21) des separaten Koaxialkabels (18) verbunden sind.

## Claims

1. Device for the continuous treatment of foodstuffs with pulsed electric fields, which has a housing with a housing base (5) extending between the side walls (3) of the housing, a circulating conveyor belt (1) guided through the housing and having drivers (7) arranged transversely to the conveying direction, and two electrodes (2) arranged in the housing and spaced apart from one another, which are connected to the terminals of opposite polarity of a voltage supply, wherein lateral insulator plates (4) are arranged on the inside of the side walls (3) on both sides of the conveyor belt (1), wherein the drivers (7) extend to a small distance, which amounts to 1 to 30 mm, from the lateral insulator plates (4) and the electrodes (2) are arranged in matching recesses of the lateral insulator plates (4), which are open towards the opposite electrode, wherein the electrodes (2) project by a maximum of 20 mm beyond the surfaces of the lateral insulator plates (4) or lie behind these.

2. Device according to claim 1, **characterised in that** the electrodes (2) are hollow cylindrical and extend perpendicular to the plane of the conveyor belt (1).

3. Device according to one of the preceding claims, **characterised in that** the electrodes (2) extend vertically.

4. Device according to one of the preceding claims, **characterised in that** the electrodes (2) are arranged with one surface flush with the lateral insulator plates (4).

5. Device according to one of the preceding claims, **characterised in that** the guides for the longitudinal edges (8) of the conveyor belt (1) run horizontally in the section in which the electrodes (2) are arranged in recesses of the lateral insulator plates (4).

6. Device according to one of the preceding claims, **characterised in that** the guides for the longitudinal edges (8) of the conveyor belt (1) run parallel to the housing base (5).

7. Device according to one of the preceding claims, **characterised in that** the housing base (5) is formed from insulator material.

8. Device according to one of the preceding claims, **characterised in that** the side walls (3) are formed from insulator material.

9. Device according to one of the preceding claims, **characterised in that** the side walls (3) and the lateral insulator plates are connected to one another in a watertight manner or are formed in one piece.

10. Device according to one of the preceding claims, **characterised in that** the small distance between the drivers (7) and the lateral insulator plates (4) is 1 to 10 mm.

11. Device according to one of the preceding claims, **characterised in that** the electrodes (2) extend perpendicularly to the guides for the longitudinal edges of the conveyor belt (1) at least from the plane of the conveyor belt (1) along the full height of the respective lateral insulator plate (4).

12. Device according to one of the preceding claims, **characterised in that** the recesses of the lateral insulator plates (4) match the cross-section of the electrodes (2) and have at least one undercut, and the electrodes (2) are held longitudinally displaceably in the recess.

13. Device according to one of the preceding claims, **characterised in that** at least one cover plate (10), which is arranged parallel to the conveyor belt (1), covers the passage cross-section between the lateral insulator plates.

14. Device according to one of the preceding claims, **characterised in that** the electrodes (2) have sections (15) which project above the filling level for water, and these sections (15) are each enclosed in a watertight manner by an enclosure (16).

15. Device according to one of the preceding claims, **characterized in that** the electrodes (2) are each connected to a voltage supply (20) by means of a separate line which is a coaxial cable (18), the shielding (22) of each coaxial cable (18) being earthed to an electrical housing (23) in which the voltage supply (20) is arranged and each electrode (2) being connected only to the central conductor (21) of the separate coaxial cable (18).

## Revendications

1. Dispositif pour le traitement en continu de produits alimentaires avec des champs électriques pulsés, qui présente un boîtier avec un fond de boîtier (5) qui s'étend entre les parois latérales (3) du boîtier, une bande transporteuse (1) rotative guidée à travers le boîtier avec des entraîneurs (7) disposés transversalement à la direction de transport, et deux électrodes (2) disposées dans le boîtier et espacées l'une de l'autre, qui sont reliées aux bornes de polarité opposée d'une alimentation en tension, des plaques isolantes latérales (4) étant disposées des deux côtés de la bande transporteuse (1), à l'intérieur, sur les parois latérales (3), les entraîneurs (7) s'étendant jusqu'à une faible distance, qui est de 1 à 30 mm, des plaques isolantes latérales (4) et les électrodes (2) étant disposées dans des évidements adaptés des plaques isolantes latérales (4), qui sont ouverts vers l'électrode opposée, les électrodes (2) dépassant de 20 mm au maximum des surfaces des plaques isolantes latérales (4) ou se trouvant derrière celles-ci.

2. Dispositif selon la revendication 1, **caractérisé en ce que** les électrodes (2) sont cylindriques creuses et s'étendent perpendiculairement au plan de la bande transporteuse (1).

3. Dispositif selon l'une des revendications précédentes, **caractérisé en ce que** les électrodes (2) s'étendent verticalement.

4. Dispositif selon l'une des revendications précédentes, **caractérisé en ce que** les électrodes (2) sont disposées avec une surface affleurant les plaques isolantes latérales (4).

5. Dispositif selon l'une des revendications précédentes, **caractérisé en ce que** les guides pour les bords longitudinaux (8) de la bande transporteuse (1) s'étendent horizontalement dans la section dans laquelle les électrodes (2) sont disposées dans des évidements des plaques isolantes latérales (4).

6. Dispositif selon l'une des revendications précédentes, **caractérisé en ce que** les guides pour les bords longitudinaux (8) de la bande transporteuse (1) sont parallèles au fond du boîtier (5).

7. Dispositif selon l'une des revendications précédentes, **caractérisé en ce que** le fond du boîtier (5) est formé d'un matériau isolant.

8. Dispositif selon l'une des revendications précédentes, **caractérisé en ce que** les parois latérales (3) sont formées d'un matériau isolant.

9. Dispositif selon l'une des revendications précédentes, **caractérisé en ce que** les parois latérales (3) et les plaques isolantes latérales sont reliées entre elles de manière étanche à l'eau ou sont formées d'une seule pièce.

10. Dispositif selon l'une des revendications précédentes, **caractérisé en ce que** la faible distance entre les entraîneurs (7) et les plaques isolantes latérales (4) est de 1 à 10 mm.

11. Dispositif selon l'une quelconque des revendications précédentes, **caractérisé en ce que** les électrodes (2) s'étendent perpendiculairement aux guides pour les bords longitudinaux de la bande transporteuse (1) au moins depuis le plan de la bande transporteuse (1) le long de la hauteur complète de la plaque isolante latérale respective (4).

12. Dispositif selon l'une des revendications précédentes, **caractérisé en ce que** les évidements des plaques isolantes latérales (4) s'adaptent à la section transversale des électrodes (2) et présentent au moins une contre-dépouille et les électrodes (2) sont maintenues dans l'évidement de manière à pouvoir se déplacer longitudinalement.

13. Dispositif selon l'une des revendications précédentes, **caractérisé en ce qu'**au moins une plaque de couvercle (10), qui est disposée parallèlement à la bande transporteuse (1), recouvre la section de passage entre les plaques isolantes latérales.

14. Dispositif selon l'une des revendications précédentes, **caractérisé en ce que** les électrodes (2) présentent des sections (15) qui dépassent le niveau de remplissage pour l'eau, et ces sections (15) sont chacune entourées de manière étanche à l'eau par une enceinte (16).

15. Dispositif selon l'une quelconque des revendications précédentes, **caractérisé en ce que** les électrodes (2) sont chacune reliées à une alimentation en tension (20) au moyen d'une ligne séparée qui est un câble coaxial (18), le blindage (22) de chaque câble coaxial (18) étant mis à la terre sur un boîtier électrique (23) dans lequel est disposée l'alimentation en tension (20) et chaque électrode (2) étant reliée uniquement au conducteur central (21) du câble coaxial séparé (18), respectivement.
